# EUROPEAN PATENT APPLICATION

(11) **EP 2 760 011 A1**
(43) Date of publication of application: **30.07.2014**
(21) Application number: 13177022.4
(22) Date of filing: 18.07.2013
(51) Int. Cl.: G09G 3/32, G09G 3/36

(54) **Flat panel display device**

(30) Priority: 23.01.2013 KR 20130007574
(71) Applicant: Samsung Display Co., Ltd., Yongin-City, Gyeonggi-Do, 446-711 (KR)
(72) Inventor: Park, Sung-Un, Gyunggi-Do (KR)
(74) Representative: Walaski, Jan Filip

(57) **Abstract**

A flat panel display device includes a printed circuit board (PCB) configured to receive power and a first image signal from outside the PCB, a film substrate configured to receive the power and the first image signal from the PCB and a second image signal from outside the film substrate, and a display panel configured to display an image according to a driving signal from the film substrate.

## Description

The present invention relates to a flat panel display device.

A flat panel display device such as a liquid crystal display device (LCD) or organic light emitting display device (OLED) includes a display panel for displaying an image and a driving circuit unit providing signals to the display panel to display the image.

The display panel is configured so that a plurality of pixels are connected, for example, in a matrix form at crossing regions of a plurality of scan lines and a plurality of data lines, and the driving circuit unit includes a scan driving circuit for driving the plurality of scan lines and a data driving circuit for driving the plurality of data lines. Scan signals are sequentially supplied from the scan driving circuit to the plurality of scan lines so as to select pixels, and data signals are supplied to data lines connected to the selected pixels, thereby displaying an image.

Generally, the driving circuit unit is mounted on a chip on film (COF) or tape carrier package (TCP) so as to be electrically connected to the display panel, and a printed circuit board (PCB) for transmitting power or signal provided from the outside to the driving circuit unit, or the display panel is connected to the COF or TCP. The signal provided from the outside is transmitted to the driving circuit unit via the PCB.

In a case where the signal provided from the outside as described above is transmitted to the driving circuit unit of the COF or TCP via the PCB, the signal may pass through a connecting portion between the PCB and the COF or TCP. Hence, the signal may be distorted or delayed due to the resistance of the connecting portion.

As the resolution and operating speed of the flat panel display device increase, the voltage level of a signal decreases, and the transmission speed of the signal increases. Hence, the electrical and transmission characteristics of the signal due to the resistance of the connecting portion may be considerably lowered.

Further, in the related art flat panel display, the PCB, the COF or TCP and the display panel are all arranged on the same plane, and hence there is a limitation to decreasing the size of the flat panel display device.

Embodiments provide a flat panel display device capable of increasing (or improving) the transmission characteristic of a signal.

Embodiments also provide a flat panel display device capable of decreasing its size and simplifying its structure.

According to an aspect of the present invention, there is provided a flat panel display device including: a printed circuit board (PCB) configured to receive power and a first image signal from outside the PCB; a film substrate configured to receive the power and the first image signal from the PCB; and a second image signal from outside the film substrate; and a display panel configured to display an image according to a driving signal from the film substrate.

The PCB may include an input terminal configured to receive the power and the first image signal from the outside and to input the power and the first image signal to the PCB, a circuit unit configured to stabilize the power, and an output terminal coupled to the film substrate.

The film substrate may include a first input terminal coupled to an output terminal of the PCB and configured to receive the power and the first image signal and to input the power and the first image signal to the film substrate; a second input terminal configured to receive the second image signal from the outside and to input the second image signal to the film substrate; a driver configured to receive the first and second image signals from the outside and to generate the driving signal; and an output terminal configured to output the driving signal from the driver.

The display panel may include an input terminal coupled to an output terminal of the film substrate and configured to receive the driving signal that is input thereto; and a display unit configured to display the image according to the driving signal.

The second image signal data for displaying the image and an interface signal may be provided to the driver.

The second image signal may have a transmission speed faster than that of the first image signal.

The second image signal may have a voltage level lower than that of the first image signal.

According to another aspect of the present invention, there may be provided a flat panel display device including: a film substrate configured to receive power, a first image signal, and a second image signal from outside the film substrate; a PCB configured to stabilize the power from the film substrate and to provide the stabilized power to the film substrate; and a display panel configured to display an image according to a driving signal from the film substrate.

The PCB may include an input/output terminal configured to input the power provided from the film substrate to the PCB, and to output the stabilized power to the film substrate.

The PCB may overlap the film substrate.

The film substrate may include a first input terminal configured to receive the power and the first image signal from the outside and to input the power and the first image signal to the film substrate; a second input terminal configured to receive the second image signal from the outside and to input the second image signal to the film substrate; a driver configured to receive the first and second image signals from the outside and to generate the driving signal; an output terminal configured to output the driving signal from the driver; and an input/output terminal coupled to the PCB.

The display panel may include: an input terminal coupled to an output terminal of the film substrate and configured to receive the driving signal that is input thereto; and a display unit configured to display the image according to the driving signal.

The display panel may include: an input terminal coupled to an output terminal of the film substrate and configured to receive the driving signal that is input thereto; and a display unit configured to display the image according to the driving signal.

The second image signal data for displaying the image and an interface signal may be provided to the driver.

The second image signal may have a transmission speed faster than that of the first image signal.

The second image signal may have a voltage level lower than that of the first image signal.

According to embodiments of the present invention, a signal having a lower voltage level or a signal having a fast transmission speed is directly provided to the driving circuit unit without passing through the PCB, etc. The transmission path of the signal is reduced or minimized, and a connecting portion is not included on the transmission path of the signal. Hence, the length of a wire or the resistance caused by the connecting portion is reduced or minimized, thereby increasing or improving the electrical and transmission characteristics of the signal.

Further, power and an image signal, provided from the outside, may be directly provided to the driving circuit unit through the film substrate, and the PCB may be positioned to overlap with the film substrate, so that it is possible to decrease the size of the flat panel display device and to improve the freedom degree of design by simplifying the structure of the flat panel display device.

The accompanying drawings, together with the specification, illustrate exemplary embodiments of the present invention, and, together with the description, serve to explain the principles of the present invention.
FIG. 1 is a plan view illustrating a flat panel display device according to an embodiment of the present invention.
FIG. 2 is a plan view illustrating in detail a printed circuit board (PCB) according to an embodiment of the present invention.
FIG. 3 is a plan view illustrating in detail a film substrate according to an embodiment of the present invention.
FIG. 4 is a plan view illustrating a state in which the PCB and the film substrate are electrically connected to a display panel according to an exemplary embodiment.
FIG. 5 is a plan view illustrating a film substrate in a flat panel display device according to another embodiment of the present invention.
FIG. 6 is a plan view illustrating a PCB according to an embodiment of the present invention.
FIG. 7 is a plan view illustrating a state in which the film substrate and the PCB are electrically connected to a display panel according to an exemplary embodiment.
FIG. 8 is a sectional view taken along the line Y1-Y2 of FIG. 7.

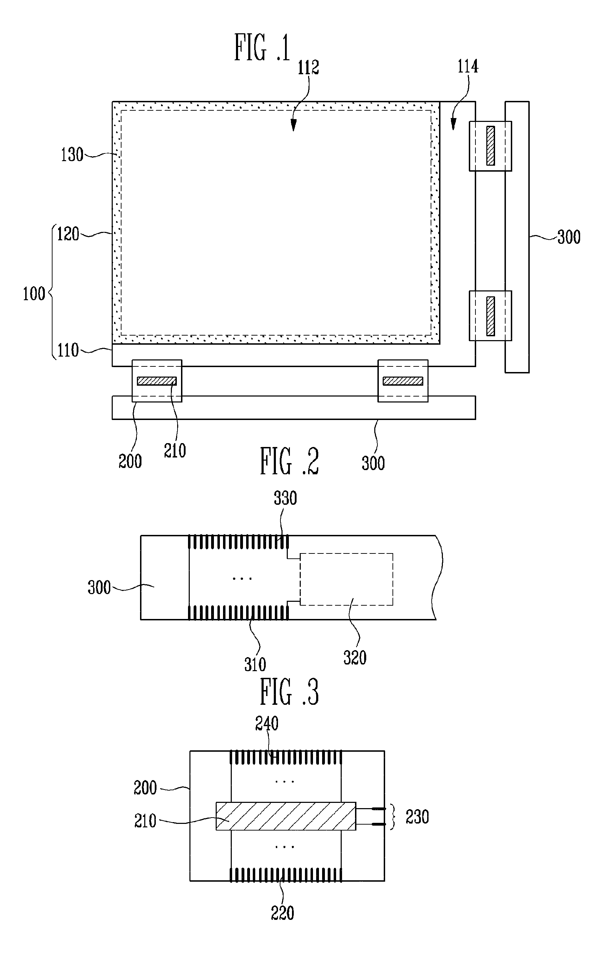

Referring to FIG. 1, the flat panel display device includes a display panel 100 for displaying an image, a film substrate 200 electrically connected to the display panel 100, and a printed circuit board (PCB) 300 electrically connected to the film substrate 200.

The display panel 100 includes a first substrate 110, a second substrate 120 and a pixel array disposed (or located) between the first and second substrates 110 and 120.

The first and second substrates 110 and 120 may be made of a transparent material such as quartz, glass or plastic, or one of the first or second substrates 110 and 120 may be made of an opaque material such as metal. The first and second substrates 110 and 120 may be formed in the shape of a thin film to have flexibility.

The first substrate 110 includes a display area 112 as a display portion for displaying an image, and a non-display area 114 around the display area 112. The second substrate 120 is disposed (or located) on the first substrate 110 including the display area 112 and a portion of the non-display area 114. A sealing material 130 surrounding the display area 112 may be formed between the first and second substrates 110 and 120 on the non-display area 114. The pixel array disposed (or located) between the first and second substrates 110 and 120 on the display area 112 may be sealed by the sealing material 130.

The pixel array may include a plurality of pixels connected, for example, in a matrix form at crossing regions of a plurality of scan lines and a plurality of data lines. Each pixel may include a liquid crystal cell or organic light emitting diode, and may further include a thin film transistor and a capacitor for operating the pixel.

The film substrate 200 includes a driving circuit unit (or driving circuit or driver) 210. The driving circuit unit 210 may be an integrated circuit (IC) in the form of a semiconductor chip, and may be mounted on the film substrate 200. The driving circuit unit 210 may be connected to input and output terminals through wires (not shown) formed on the film substrate 200. The film substrate 200 may be configured with a chip on film (COF) or tape carrier package (TCP). The driving circuit unit 210 may include a scan driving circuit (or scan driver) for providing scan signals to the scan lines or a data driving circuit (or data driver) for providing a data signals to the data lines.

The PCB 300 is connected to the film substrate 200 having the scan driving circuit and the film substrate 200 having the data driving circuit. The PCB 300 may be configured as a flexible printed circuit board (FPCB). The PCB 300 may include a circuit unit that generates power and control signals for stably driving the display panel 100.

For example, a plurality of input terminals are formed at one side of the display panel 100 so as to be connected to the scan lines through wires, and a plurality of film substrates 200 having the scan driving circuits are electrically connected to the plurality of input terminals. A plurality of input terminals are formed at another side of the display panel 100 so as to be connected to the data lines through wires, and a plurality of film substrates 200 having the data driving circuits may be electrically connected to the plurality of input terminals.

The structure in which one PCB 300 is connected to a plurality of film substrates 200 has been illustrated in FIG. 1. However, a structure in which the PCB 300 is connected to each film substrate 200 may be implemented.

FIG. 2 is a plan view illustrating in detail the PCB 300 according to an embodiment of the present invention. FIG. 3 is a plan view illustrating in detail the film substrate 200 according to an embodiment of the present invention.

Referring to FIG. 2, the PCB 300 includes an input terminal 310 through which power and a first image signal, provided from the outside (also referred to as an external image signal), may be input to the PCB 300, a circuit unit 320 for stabilizing the power and generating several control signals, and an output terminal 330 connected to the film substrate 200. The input terminal 310 may be configured in the form of a connector so as to be easily connected to an external device.

The circuit unit may, for example, comprise a voltage regulator for providing a stabilized power supply.

Referring to FIG. 3, the film substrate 200 includes a first input terminal 220 connected to the output terminal 330 of the PCB 300 and through which the power and the first image signal may be transmitted to the film substrate 200, a second input terminal 230 through which a second image signal provided from the outside may be input to the film substrate 200, a driving circuit unit 210 for receiving the second image signal input from the outside so as to generate a driving signal, and an output terminal 240 through which the driving signal may be output from the film substrate 200. The second input terminal 230 may be configured in the form of a connector so as to be easily connected to an external device.

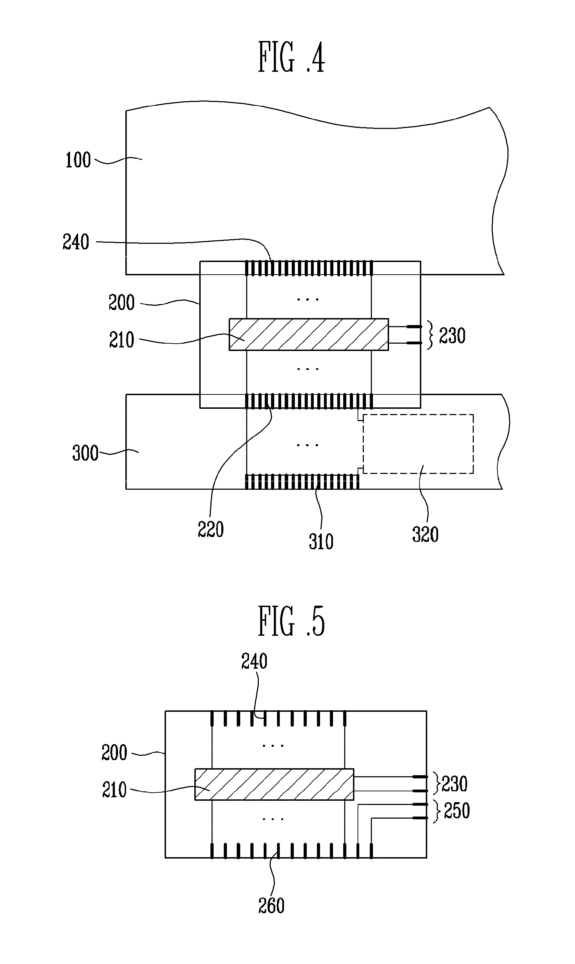

FIG. 4 is a plan view illustrating a state in which the PCB 300 and the film substrate 200 are electrically connected to the display panel according to an exemplary embodiment.

Referring to FIG. 4, the output terminal 240 of the film substrate 200 is electrically connected to the input terminal of the display panel 100, and the output terminal 330 of the PCB 300 is electrically connected to the first input terminal 220 of the film substrate 200.

The input and output terminals may be electrically connected to each other by being disposed (or positioned) to overlap with each other and then compressed in a state in which an anisotropic conductive film is interposed therebetween. A conductive ball of the anisotropic conductive film may be broken by the compression in the state in which the input and output terminals are aligned, so that the input and output terminals are electrically connected to each other through the conductive ball.

In the flat panel display device according to this embodiment, the power and the first image signal may be input from the outside through the input terminal 310 of the PCB 300, and the second image signal may be input through the second input terminal 230 of the film substrate 200. The driving circuit unit 210 may generate a driving signal using the first and second image signals, and may provide the generated driving signal to the display panel 100. The driving signal may include scan and data signals.

The first image signal may include data for displaying an image and a control signal, and the second image signal may include data for displaying an image and an interface signal provided to the driving circuit unit 210. The second image signal may be a signal having a transmission speed faster than that of the first image signal or having a voltage level lower than that of the first image signal. For example, the second image signal may include a low voltage differential signal (LVDS), a mobile industry processor interface (MIPI), and/or the like, which are output from a high-speed network or computer system. The LVDS or MIPI may include a clock and data.

According to this embodiment, the second image signal having a fast transmission speed or low voltage level is directly provided to the driving circuit unit 210 of the film substrate 200 without passing through the PCB 300. Hence, the transmission path of the signal is reduced (or minimized), and a connecting portion is not included on the transmission path of the signal.

In a case where, like the first image signal, the second image signal is provided through the input terminal 310 of the PCB 300, the second image signal may pass through a connecting portion at which the output terminal 330 of the PCB 300 and the input terminal 220 of the film substrate 200 are connected to each other. Therefore, the second image signal may be input to the driving circuit unit 210 through a long path.

Because the connecting portion is formed through physical contact between the output terminal 330 and the input terminal 220, the connecting portion has a resistance value, and the electrical and transmission characteristics of the second image signal may be lowered by the resistance value. Because the resistance value may be changed depending on a physical contact state, the resistance value may be changed for each connecting portion, and therefore, the reliability of the second image signal may be reduced (or deteriorated). If the transmission path of the signal is lengthened, the electrical and transmission characteristics of the signal may be lowered, and therefore, electromagnetic interference may be caused.

However, in embodiments of the present invention, the second image signal that may cause such a problem may be separately provided through the second input terminal 230 of the film substrate 200, so that the transmission path of the signal is reduced (or minimized), thereby increasing (or improving) the transmission characteristic of the signal. Further, it is possible to reduce the possibility (or prevent) the reliability of the signal from being deteriorated by the unequal distribution of the resistance value.

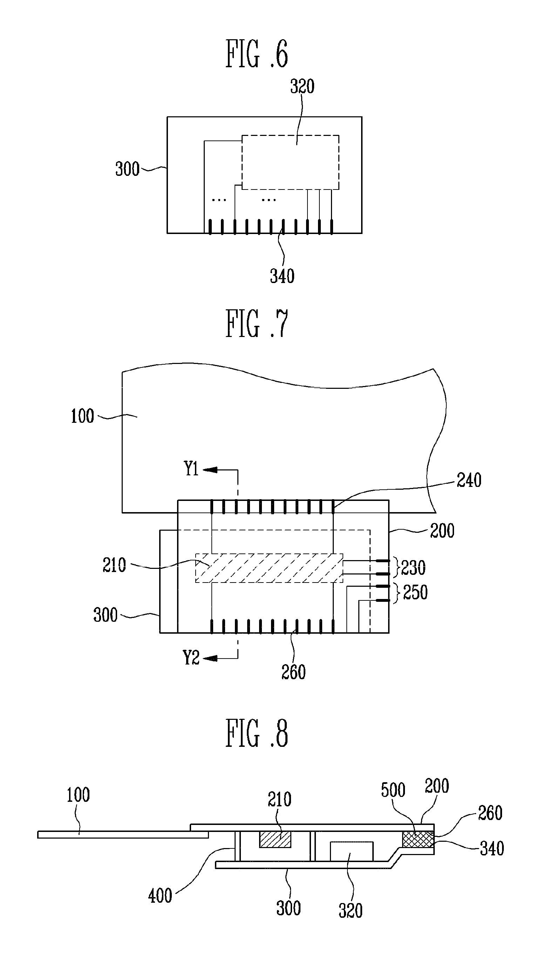

FIG. 5 is a plan view illustrating a film substrate 200 in a flat panel display device according to another embodiment of the present invention. FIG. 6 is a plan view illustrating a PCB 300 according to an embodiment of the present invention.

Referring to FIG. 5, the film substrate 200 includes a first input terminal 250 through which power and a first image signal, provided from the outside, may be input to the film substrate 200, a second input terminal 230 through which a second image signal provided from the outside may be input to the film substrate 200, a driving circuit unit 210 receiving the first and second image signals input from the outside so as to generate a driving signal, an output terminal 240 through which the driving signal may be output from the film substrate 200, and an input/output terminal 260 connected to the PCB 300. The first and second input terminals 250 and 230 may be configured in the form of a connector so as to be easily connected to an external device.

Referring to FIG. 6, the PCB 300 includes an input/output terminal 340 connected to the input/output terminal 260 of the film substrate 200, and a circuit unit 320.

FIG. 7 is a plan view illustrating a state in which the film substrate 200 and the PCB 300 are electrically connected to the display panel 100 according to an exemplary embodiment. FIG. 8 is a sectional view taken along line the Y1-Y2 of FIG. 7.

Referring to FIGS. 7 and 8, the PCB 300 is disposed (or positioned) to overlap with a lower or upper portion of the film substrate 200, and the input/output terminal 340 of the PCB 300 and the input/output terminal 260 of the film substrate 200 are electrically connected to each other, for example, by being compressed in a state in which an anisotropic conductive film 500 is interposed therebetween.

The circuit unit 320 of the PCB 300 stabilizes power provided from the outside, which is transmitted from the film substrate 200 through the input/output terminal 340, and may generate several control signals. The circuit unit 320 of the PCB 300 provides the stabilized power and the control signals to the film substrate 200 through the input/output terminal 340.

Referring to FIG. 8, a spacer 400 may be interposed between the PCB 300 and the film substrate 200 disposed (or positioned) to overlap with each other. A constant distance between the PCB 300 and the film substrate 200 is maintained by the spacer 400, so that it is possible to protect the driving circuit unit 210 and the circuit unit 320. The spacer 400 may be configured with a double-faced tape or the like.

In the flat panel display device according to this embodiment, the power provided from the outside, the first image signal and the second image signal may be input to the film substrate 200 through the first and second input terminals 250 and 230 of the film substrate 200. The driving circuit unit 210 may generate a driving signal using the first and second image signals, and may provide the generated driving signal to the display panel 100. The driving signal may include scan and data signals.

The first image signal may include data for displaying an image and a control signal, and the second image signal may include data for displaying an image and an interface signal provided to the driving circuit unit 210. The second image signal may be a signal having a transmission speed faster than that of the first image signal or having a voltage level lower than that of the first image signal. For example, the second image signal may include an LVDS, an MIPI, and/or the like, which are output from a high-speed network or computer system. The LVDS or MIPI may include a clock and data.

According to this embodiment, the second image signal having a fast transmission speed or low voltage level may be directly provided to the driving circuit unit 210 of the film substrate 200 without passing through the PCB 300. Hence, the transmission path of the signal is reduced (or minimized), and a connecting portion may not be included on the transmission path of the signal. Further, because the PCB 300 is disposed (or positioned) to overlap with the film substrate 200, it is possible to decrease the size of the flat panel display device and to increase (or improve) the freedom degree of design by simplifying the structure of the flat panel display device.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A flat panel display device comprising:
a printed circuit board PCB (300) configured to receive a first external image signal;
a film substrate (200) configured to receive the first external image signal from the PCB (300) and to receive a second external image signal; and
a display panel (100) configured to display an image according to a driving signal from the film substrate (200).

2. The flat panel display device of claim 1, wherein the film substrate (200) comprises:
a first input terminal (220) connected to an output terminal (330) of the PCB and configured to receive the first external image signal;
a second input terminal (230) configured to receive the second external image signal;
a driver (210) configured to receive the first and second external image signals and to generate the driving signal; and
an output terminal (240) configured to output the driving signal from the driver.

3. The flat panel display device of claim 1 or 2, wherein the PCB (300) comprises:
an input terminal (310) configured to receive power and the first external image signal;
a circuit unit (320) configured to stabilize the power; and
an output terminal (330) connected to the film substrate.

4. The flat panel display device of any one of the preceding claims, wherein the display panel (100) comprises:
an input terminal coupled to an output terminal (240) of the film substrate and configured to receive the driving signal; and
a display unit configured to display the image according to the driving signal.

5. The flat panel display device of any one of the preceding claims when dependent on claim 2, wherein the second external image signal includes data for displaying the image and an interface signal provided to the driver.

6. The flat panel display device of any one of the preceding claims, wherein the second external image signal has a transmission speed faster than that of the first external image signal.

7. The flat panel display device of any one of the preceding claims, wherein the second external image signal has a voltage level lower than that of the first external image signal.

8. A flat panel display device comprising:
a film substrate (200) configured to receive first and second external image signals;
a PCB (300) connected to the film substrate; and
a display panel (100) configured to display an image according to a driving signal from the film substrate (200).

9. The flat panel display device of claim 8, wherein the film substrate (200) is connected to an external power supply, and the PCB (300) comprises an input/output terminal (340) configured to receive power from the film substrate and to provide a stabilized power supply to the film substrate.

10. The flat panel display device of claim 8 or 9, wherein the PCB is arranged to overlap the film substrate.

11. The flat panel display device of claim 8, 9 or 10, wherein the film substrate comprises:
a first input terminal (250) configured to receive the first external image signal;
a second input terminal (230) configured to receive the second external image signal;
a driver (210) configured to receive the first and second external image signals and to generate the driving signal; and
an output terminal (240) configured to output the driving signal from the driver; and
an input/output terminal (260) connected to the PCB.

12. The flat panel display device of claim 11 when dependent on claim 9, wherein the first input terminal (250) is connectable to the external power supply.

13. The flat panel display device of any one of claims 8 to 12, wherein the display panel comprises:
an input terminal coupled to an output terminal (240) of the film substrate and configured to receive the driving signal; and
a display unit configured to display the image according to the driving signal.

14. The flat panel display device of any one of claims 8 to 13, wherein the second external image signal includes data for displaying the image and an interface signal provided to the driver.

15. The flat panel display device of any one of claims 8 to 14, wherein the second external image signal has a transmission speed faster than that of the first external image signal, and/or wherein the second external image signal has a voltage level lower than that of the first external image signal.

## Amended claims

### Amended claims in accordance with Rule 137(2) EPC.

**1.** A flat panel display device comprising:
a film substrate (200) configured to receive first and second external image signals;
a printed circuit board PCB (300) connected to the film substrate (200); and
a display panel (100) configured to display an image according to a driving signal from the film substrate (200),
wherein the first external image signal is input to the film substrate (200) either via the PCB (300) or not via the PCB (300), and the second external image signal is input to the film substrate (200) not via the PCB (300).

**2.** The flat panel display device of claim 1, wherein the film substrate (200) comprises:
a first input terminal (220) connected to an output terminal (330) of the PCB and configured to receive the first external image signal;
a second input terminal (230) configured to receive the second external image signal;
a driver (210) configured to receive the first and second external image signals and to generate the driving signal; and
an output terminal (240) configured to output the driving signal from the driver.

**3.** The flat panel display device of claim 1 or 2, wherein the PCB (300) comprises:
an input terminal (310) configured to receive power and the first external image signal;
a circuit unit (320) configured to stabilize the power; and
an output terminal (330) connected to the film substrate.

**4.** The flat panel display device of any one of the preceding claims, wherein the display panel (100) comprises:
an input terminal coupled to an output terminal (240) of the film substrate and configured to receive the driving signal; and
a display unit configured to display the image according to the driving signal.

**5.** The flat panel display device of any one of the preceding claims when dependent on claim 2, wherein the second external image signal includes data for displaying the image and an interface signal provided to the driver.

**6.** The flat panel display device of any one of the preceding claims, wherein the second external image signal has a transmission speed faster than that of the first external image signal.

**7.** The flat panel display device of any one of the preceding claims, wherein the second external image signal has a voltage level lower than that of the first external image signal.

**8.** A flat panel display device of claim 1, wherein both external image signals are directly input to the film substrate (200) not via the PCB (300).

**9.** The flat panel display device of claim 8, wherein the film substrate (200) is connected to an external power supply, and the PCB (300) comprises an input/output terminal (340) configured to receive power from the film substrate and to provide a stabilized power supply to the film substrate.

**10.** The flat panel display device of claim 8 or 9, wherein the PCB is arranged to overlap the film substrate.

**11.** The flat panel display device of claim 8, 9 or 10, wherein the film substrate comprises:
a first input terminal (250) configured to receive the first external image signal;
a second input terminal (230) configured to receive the second external image signal;
a driver (210) configured to receive the first and second external image signals and to generate the driving signal; and
an output terminal (240) configured to output the driving signal from the driver; and
an input/output terminal (260) connected to the PCB.

**12.** The flat panel display device of claim 11 when dependent on claim 9, wherein the first input terminal (250) is connectable to the external power supply.

**13.** The flat panel display device of any one of claims 8 to 12, wherein the display panel comprises:
an input terminal coupled to an output terminal (240) of the film substrate and configured to receive the driving signal; and
a display unit configured to display the image according to the driving signal.

**14.** The flat panel display device of any one of claims 8 to 13, wherein the second external image signal includes data for displaying the image and an interface signal provided to the driver.

**15.** The flat panel display device of any one of claims 8 to 14, wherein the second external image signal has a transmission speed faster than that of the first external image signal, and/or wherein the second external image signal has a voltage level lower than that of the first external image signal.
